Europäisches Patentamt

(19) European Patent Office

Office européen des brevets

(11) Numéro de publication: **0 274 315**
**B1**

(12) FASCICULE DE BREVET EUROPEEN

(45) Date de publication du fascicule du brevet:
07.02.90

(21) Numéro de dépôt: 87402825.1

(22) Date de dépôt: 11.12.87

(51) Int. Cl.⁴: **B60Q 1/26**

(54) **Ensemble de signalisation à deux feux à plages éclairantes tronquées pour véhicule automobile.**

(30) Priorité: **12.12.86 FR 8617413**

(43) Date de publication de la demande:
**13.07.88 Bulletin 88/28**

(45) Mention de la délivrance du brevet:
**07.02.90 Bulletin 90/6**

(84) Etats contractants désignés:
**DE ES IT**

(56) Documents cités:
**DE-C- 973 887**
**US-A- 3 711 704**

(73) Titulaire: **VALEO VISION, 17, rue Henri Gautier,**
**F-93012 Bobigny Cédex(FR)**

(72) Inventeur: **Dilouya, Gilbert, 8 quai de la Marne,**
**F-75019 Paris(FR)**

(74) Mandataire: **Martin, Jean-Jacques et al, Cabinet**
**REGIMBEAU 26, Avenue Kléber, F-75116 Paris(FR)**

## Description

La présente invention a trait d'une façon générale aux feux de signalisation pour véhicules automobiles, et concerne plus particulièrement un ensemble de deux feux, par exemple intégrés à un meme bloc optique, qui doivent respecter l'un par rapport à l'autre des relations géométriques données.

Les règlements européens en vigueur en matière d'éclairage automobile édictent un certain nombre de règles concernant notamment la disposition des feux entre eux et par rapport au véhicule.

En particulier, lorsqu'un feu stop et un feu anti-brouillard arrière doivent etre tous deux incorporés à l'arrière d'un véhicule, ces règlements stipulent que la distance entre ces feux doit alors être supérieure ou égale à 100 mm.

Les concepteurs répondent traditionnellement à cette exigence en écartant ces deux feux l'un de l'autre de la distance appropriée et en disposant entre eux soit un autre feu ou un catadioptre du même bloc optique, soit une partie de carrosserie, soit encore un élément de style.

Ainsi, les règlements interdisent toute amélioration d'un bloc optique, que ce soit en termes de style ou en termes d'encombrement, qui pourrait être apportée en rapprochant ces deux feux l'un de l'autre autant qu'on le souhaiterait.

Sur le plan du style, les concepteurs tentent de satisfaire à cette limitation tout en assurant une certaine continuité dans l'aspect du bloc optique lorsqu'il est éteint. Une solution connue consiste à interposer, entre les deux globes de couleur rouge associées respectivement au feu stop et au feu anti-brouillard, une glace mitoyenne de même couleur réunissant lesdits globes avec continuité mais ne constituant pas une plage éclairante. Cependant, il est en pratique impossible, malgré cette continuité de matière, d'atteindre la continuité d'aspect souhaitée.

Par ailleurs, la solution classique qui consiste à interposer le feu de position arrière rouge entre le feu stop et le feu anti-brouillard arrière est impossible à mettre en oeuvre lorsque, comme cela est fréquent, le feu de position et le feu stop sont incorporés en une même unité et ont donc meme plage éclairante. Elle peut également ne pas etre souhaitable.

Ainsi, la présente invention vise à pallier toutes les limitations ci-dessus en proposant un ensemble de deux feux dont la disposition mutuelle puisse être choisie avec une grande souplesse, et ce en surmontant le préjugé qui consiste, pour respecter la distance entre les deux feux lorsqu'ils sont tous deux allumés, c'est-à-dire entre leurs plages d'émission, à séparer physiquement ces deux feux de la distance requise.

A cet effet la présente invention concerne un ensemble de signalisation à deux feux pour véhicule automobile, du type comprenant chacun une lampe, un réflecteur et un globe de fermeture, et dont les plages éclairantes respectives doivent être séparées par une distance optique prédéterminée, caractérisé en ce que les deux feux sont séparés par une distance physique sensiblement inférieure à ladite distance optique et en ce qu'au moins l'un des deux feux comporte, dans une zone adjacente à l'autre feu, des moyens déviateurs des rayons lumineux qu'il émet afin que les rayons ainsi déviés ne participent pas à la plage éclairante dudit feu et que ladite distance optique soit respectée.

L'invention permet en particulier d'accoler les deux feux, au grand avantage du style.

En outre, les moyens déviateurs pourront comprendre des prismes formés sur le ou les globes de ferme ture, ou encore des zones modifiées du réflecteur d'au moins l'un des deux feux.

L'invention sera mieux comprise à la lecture de la descripton détaillée suivante de formes de réalisation préférées de celle-ci, donnée à titre d'exemple et faite en aux dessins annexés, sur lesquels :

- la figure 1 est une vue en coupe horizontale d'un ensemble de deux feux de signalisation de la technique antérieure,
- la figure 2 est une vue en coupe horizontale schématique d'un ensemble de deux feux de signalisation conforme à une première réalisation de l'invention,
- la figure 3 est une vue en coupe horizontale schématique d'une variante d'exécution de l'ensemble de feux de la figure 2,
- la figure 4 est une vue en coupe horizontale schématique d'une seconde forme de réalisation d'un ensemble de deux feux de l'invention,
- la figure 5 est une vue de face de l'ensemble de deux feux de la figure 4, et
- la figure 6 est une vue en coupe horizontale schématique d'une variante de réalisation de l'ensemble de feux de la figure 4.

En référence tout d'abord à la figure , on a représenté schématiquement en coupe horizontale un ensemble de deux feux de signalisation de véhicule de la technique antérieure, par exemple incorporés à un même bloc optique, et comprenant dans le présent exemple un feu stop 10a et un feu anti-brouillard arrière 10b. Ils comprennent chacun une lampe, respectivement 12a, 12b, un réflecteur, respectivement 14a, 14b et un globe de fermeture essentiellement plat, respectivement 16a, 16b.

Les réflecteurs 14a et 14b sont du genre para bolique et sont focalisés approximativement sur les filaments respectifs des lampes 12a, 12b.

De la sorte, chaque feu émet un faisceau de rayons lumineux essentiellement parallèles à son axe optique.

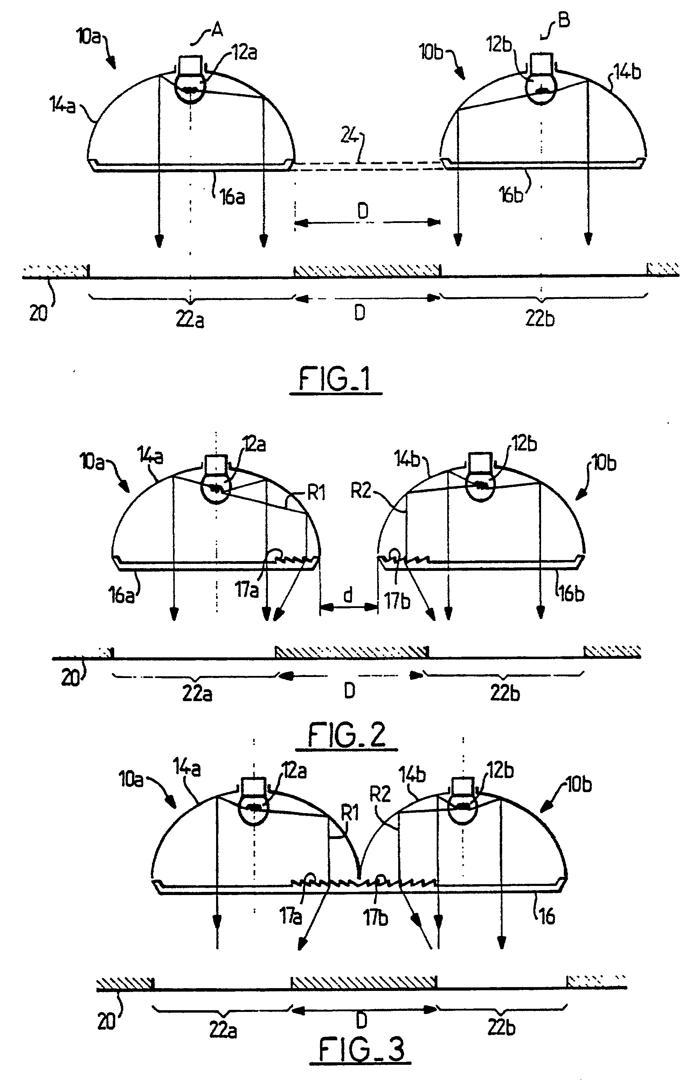

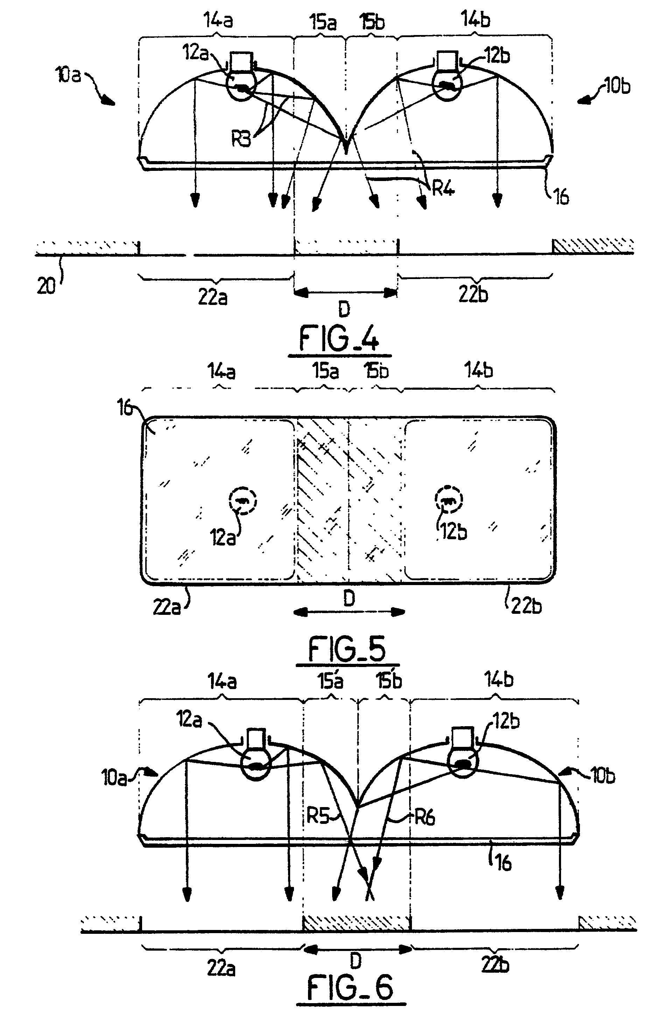

On a représenté dans la partie inférieure de la figure 1, sur une ligne 20 schématisant un plan perpendicualire aux axes optiques parallèles A et B des deux feux, les plages éclairantes, respectivement 22a, 22b desdits feux.

On peut rappeler ici que, conformément aux règlements enropéens, la distance entre un feu anti-brouillard arrière et un feu stop doit dans tous les cas être supérieure à 100 mm. C'est pourquoi, dans la réalisation conventionnelle de la figure 1, on a respecté entre les feux une distance physique D de 100 mm.

On entend par "distance entre les feux" la distance entre leurs plages éclairantes. La plage éclairante d'un feu est expressément définie par ces mêmes règlements comme étant la projection orthogonale du feu sur un plan perpendiculaire à son axe de référence et en contact avec la surface extérieure du feu, dont les limites sont telles qu'elle laisse subsister 98% de l'intensité lumineuse du feu dans la direction de l'axe de référence.

La ligne 20 schématise le lan perpendiculaire ci-dessus, et a été écartée de la surface extérieure du feu uniquement à des fins de clarification du dessin.

En pratique, les définitions ci-dessus signifient que la plage éclairante d'un feu est définie approximativement par la projection sur le plan perpendiculaire 20 de l'ensemble des rayons lumineux qui émanent du feu parallèlement à son axe optique.

Ainsi, dans la réalisation conventionnelle, les bords voisins des deux feux sont séparés d'une distance physique D égale à 100 mm. De la sorte, les plages éclairantes sont dans ce cas également séparées de 100 mm, et les règlements imposés sont respectés.

On comprend que cette règle spécifique constitue une limitation importante lors de la conception de blocs optiques de véhicules automobiles. Il est ainsi impossible de rapprocher l'un de l'autre un feu stop et un feu anti-brouillard , autant qu'on le souhaite, ni de les accoler l'un à l'autre. En pratique, cette limitation se traduit par l'interposition entre les deux feux 10a et 10b soit d'un autre feu (par exemple feu de recul), soit par exemple d'une plaque, représentée en traits pointillés et indiquée en 24, réalisée dans la même matière plastique transparente rouge que les globes 16a et 16b et réunissant ceux-ci avec continuité de manière à former un tout d'une seule pièce. Mais l'observation extérieure du bloc de feux ainsi constitué, ou de la partie d'un bloc optique entier que celui-ci constitue, révèle cependant, lorsque les deux feux sont éteints, une discontinuité d'aspect nettement perceptible, qui est tout à fait désavantageuse.

On a représenté sur la figure 2 une première forme de réalisation d'un ensemble de deux feux selon l'invention. Sur cette figure et celles qui suivent, les mêmes numéros de référence désignent des éléments ou parties identiques ou similaires à ceux de la figure 1, et ceux-ci ne seront pas décrits à nouveau.

Comme on peut l'observer, les deux feux 10a et 10b, qui sont encore respectivement un feu stop et un feu anti-brouillard, sont espacés horizontalement d'une distance physique d sensiblement inférieure à la distance optique D de 100 mm qui doit normalement séparer les feux. En même temps, le globe de fermeture, respectivement 16a, 16b, de chacun des deux feux, comporte, dans la région de son bord libre adjacent à l'autre feu, sur une largeur donnée et sur toute la hauteur du feu, des moyens déviateurs de la lumière, ici sous la forme de prismes, respectivement 17a, 17b, s'étendant verticalement.

Ainsi, les rayons tels que $R_1$ et $R_2$ qui sont réfléchis par les réflecteurs 14a et 14b parallèlement aux axes A et B vont, en traversant les globes, perdre leur relation de parallélisme avec lesdits axes, avec un écart angulaire suffisamment important, et par conséquent ne vont plus participer à la définition des plages éclairantes respectives 22a et 22b desdits feux. Plus précisément, la largeur des zones déviatrices sera choisie de manière à ce que la distance optique D entre les plages éclairantes 22a, 22b ainsi tronquées soit supérieure ou égale à la valeur critique de 100 mm.

On a représenté ici une configuration dans laquelle les zones déviatrices 17a et 17b des deux globes ont sensiblement la même importance, à savoir une largeur de l'ordre de la moitié de la différence entre la distance de séparation optique D et la distance de séparation physique d des deux feux. Mais il est bien entendu que ces deux zones pourront être d'importances inégales, et un cas extrême, dans lequel seul l'un des deux globes portera des éléments déviateurs 17a ou 17b, sur une largeur de l'ordre de D-d, pourra être envisagé.

L'invention permet ainsi de rapprocher les deux feux autant qu'on le souhaite en deçà de la distance de séparation optique de leurs plages éclairantes.

Bien entendu, la configuration la plus intéressante, notamment lorsque tous les feux arrière d'un côté sont incorporés dans un même bloc optique, consistera à accoler les deux feux, comme représenté sur la figure 3.

Dans ce cas, les globes de fermeture des deux feux seront avantageusement réalisés d'un seul tenant (référence 16), qui pourra faire partie du globe de fermeture unique du bloc optique considéré. Les stries 17a, 17b ou autres éléments déviateurs seront alors incorporés au globe de part et d'autre de la ligne verticale de transition entre les feux 10a et 10b.

Bien entendu, les éléments formés sur le globe de fermeture pour dévier les rayons lumineux afin qu'ils quittent leur relation de parallélisme avec l'axe de référence et qu'ils ne participent donc pas à la plage éclairante considérée pourront prendre toute forme appropriée autre que celle décrite ci-dessus. En particulier, les prismes pourront être orientés horizontalement et dévier les rayons lumineux vers le haut et/ou vers le bas.

Dans le même ordre d'idées, les prismes pourront être verticaux comme décrit plus haut mais dévier les rayons lumineux dans la direction opposée par rapport à ce qui est représenté sur les figures 2 et 3.

On a représenté sur les figures 4 et 5 une seconde forme de réalisation de l'invention.

Ici, la déviation des rayons lumineux ne s'effectue plus par des moyens prévus sur le ou les globes de fermeture des deux feux, mais en modifiant localement les réflecteurs paraboliques de ceux-ci, en deux zones respectives, de manière à ce que chacune de ces zones ne réfléchissent pas les rayons lumineux émis par le filament de la lampe associée dans une direction parallèle à l'axe de référence.

Ainsi le réflecteur 14a comporte une zone qui présente en projection parallèlement à l'axe optique la forme d'une bande verticale longeant la ligne de transition entre les deux feux 10a et 10b et qui a la particulartié de dévier les rayons lumineux tels que $R_3$ vers l'intérieur par rapport à la direction normale. De la sorte, tous les rayons émanant du feu dans cette région ne participeront pas à la plage éclairante.

De même, le feu 10b comporte une zone réfléchissante modifiée 16b, essentiellement symétrique de la première, et tous les rayons $R_4$ réfléchis par cette zone ne participent pas non plus à la plage éclairante.

Ici encore, bien que les deux feux 10a et 10b soient accolés l'un à l'autre, ils sont conçus pour que leurs plages éclairantes 22a et 22b soient séparées de la distance D requise, à savoir 100 mm pour le réglement européen entre un feu stop et un feu anti-brouillard arrière, la zone morte correspondante étant illustrée par des hachures sur la figure 5, ainsi que sur les autres figures.

Les zones respectives 15a, 15b des réflecteurs 14a et 14b pourront prendre toute forme appropriée donnant les résultats souhaités. Il pourra s'agir notamment de portions de parabolodes dont les foyers seront décalés par rapport aux filaments des lampes respectives 12a, 12b et/ou dont les axes seront décalés angulairement par rapport aux axes de référence des réflecteurs.

On a représenté sur la figure 6 une variante de réalisation de la figure 4 dans laquelle les zones modifiées 15a, 15b des réflecteurs 14a, 14b sont conçues pour réfléchir les rayons lumineux vers l'extérieur par rapport aux axes de référence.

Bien que l'on ait illustré seulement le cas où les plages éclairantes des deux feux doivent être espacées horizontalement, il est bien entendu que l'invention s'applique également au cas où les deux feux sont superposés l'un au-dessus de l'autre, ou encore pour respecter la distance de séparation D dans une direction tout à fait quelconque.

En outre, bien que l'invention s'applique tout à fait favorablement à un feu stop et un feu anti-brouillard, il est bien entendu qu'elle s'appliquera tout autant à d'autres configurations de feux qui doivent être "optiquement" séparés d'une distance quelconque et que l'on souhaite rapprocher l'un de l'autre.

Enfin, les feux conformes à la présente invention pourront comporter tout aménagement complémentaire classique, et notamment toutes stries ou billes formées à la surface extérieure pour effectuer une faible dispersion latérale des faisceaux lumineux. Dans ce cas, les moyens déviateurs selon l'invention seront conçus pour dévier les rayons d'un angle suffisant par rapport à l'axe de référence considéré pour que seule une partie négligeable des rayons déviés ne soient à nouveau redressés par ces stries ou billes.

## Revendications

1. Ensemble de signalisation à deux feux (10a, 10b) pour véhicule automobile, du type comprenant chacun une lampe (12a, 12b), un réflecteur (14a, 14b) et un globe de fermeture (16a, 16b; 16), et dont les plages éclairantes respectives (22a, 22b) doivent être séparées par une distance optique (D) prédéterminée, caractérisé en ce que les deux feux sont séparés par une distance physique (d) sensiblement inférieure à ladite distance optique (D), et en ce qu'au moins l'un des deux feux comporte, dans une zone adjacente à l'autre feu, des moyens déviateurs (17a, 17b; 15a, 15b; 15'a, 15'b) des rayons lumineux qu'il émet afin que les rayons ainsi déviés ne participent pas à la plage éclairante (22a, 22b) dudit feu et que ladite distance optique soit respectée.

2. Ensemble de deux feux selon la revendication 1, caractérisé en ce que la distance physique (d) entre les deux feux (10a, 10b) est nulle, ceux-ci étant mutuellement accolés et possédant un globe de fermeture commun (16).

3. Ensemble de deux feux selon l'une quelconque des revendications 1 et 2, caractérisé en ce que chacun des deux feux (10a, 10b) comporte des moyens déviateurs (17a, 17b; 15a,15b; 15'a, 15'b)

4. Ensemble de deux feux selon la revendication 3, caractérisé en ce que les deux feux (10a, 10b) comportant des moyens déviateurs dans des zones ayant sensiblement la même étendue.

5. Ensemble de deux feux selon l'une quelconque des revendications 1 à 4, caractérisé en ce que les moyens déviateurs comprennent des prismes (17a, 17b) formés sur le ou les globes de fermeture (16; 16a, 16b).

6. Ensemble de deux feux selon la revendication 5, caractérisé en ce que les prismes (17a, 17b) d'une zone s'étendent essentiellement parallèlement au bord de ladite zone qui est voisin de l'autre feu.

7. Ensemble de deux feux selon l'une quelconque des revendications 1 à 4, caractérisé en ce que les moyens déviateurs sont constitués par une partie (15a,15b; 15'a, 15'b) du ou des réflecteurs (14a, 14b).

8. Ensemble de deux feux selon l'une quelconque des revendications précédentes, caractérisé en ce que les deux feux sont disposés côte-à-côte, les distances optiques (D) et physique (d) étant mesurées horizontalement, et en ce que lesdites zones sont en forme de bandes verticales occupant toute la hauteur des feux et dont la somme des largeurs est sensiblement égale à la différence (D-d) entre les distances optique et physique.

9. Ensemble de deux feux selon l'une quelconque des revendications précédentes, caractérisé en ce que les deux feux sont respectivement un feu stop et un feu antibrouillard arrière.

10. Ensemble de deux feux selon la revendication 9, caractérisé en ce que la distance optique (D) qui doit séparer les plages éclairantes (22a, 22b) des deux feux est au minimum de 100 mm.

## Claims

1. A lighting unit for an automotive vehicle, of the type having two lights (10a, 10b) each of which comprises a light bulb (12a, 12b), a reflector (14a, 14b) and a closure lens (16a, 16b; 16), and wherein the respective fields of illumination (22a, 22b) must be separated by a predetermined optical distance (D), characterised in that the two lights are separated by a physical distance (d) which is substantially smaller than the said optical distance (D), and in that at least one of the two lights includes, in a zone adjacent to the other light, deflecting means (17a, 17b;

15a, 15b; 15'a, 15'b) for the light beams which it emits, whereby the beams thereby deflected do not contribute to the illumination of the said field (22a, 22b) of the said light, and so that the said optical distance is preserved.

2. A unit with two lights according to Claim 1, characterised in that the physical distance (d) between the two lights (10a, 10b) is nil, with the latter being joined to each other and having a common closure lens (16).

3. A unit with two lights according to either one of Claims 1 and 2, characterised in that each of the two lights (10a, 10b) includes deflecting means (17a, 17b; 15a, 15b; 15'a, 15'b).

4. A unit with two lights according to Claim 3, characterised in that the two lights (10a, 10b) include deflecting means in zones having substantially the same area.

5. A unit with two lights according to any one of Claims 1 to 4, characterised in that the deflecting means comprise prisms (17a, 17b) formed on the closure lens (16) or lenses (16a, 16b).

6. A unit with two lights according to Claim 5, characterised in that the prisms (17a, 17b) of one zone extend essentially parallel to the edge of the said zone which is adjacent to the other light.

7. A unit with two lights according to any one of Claims 1 to 4, characterised in that the deflecting means comprise a portion (15a, 15b; 15'a, 15'b) of the reflector or reflectors (14a, 14b).

8. A unit with two lights according to any one of the preceding Claims, characterised in that the two lights are arranged side by side, the optical distance (D) and the physical distance (d) being measured horizontally, and in that the said zones are in the form of vertical bands extending over the full height of the lights, the sum of the widths of the said bands being substantially equal to the difference (D–d) between the optical and physical distances.

9. A unit with two lights according to any one of the preceding Claims, characterised in that the two lights are respectively a stop light and a rear fog light.

10. A unit with two lights according to Claim 9, characterised in that the optical distance (D) which must separate the fields of illumination (22a, 22b) of the two lights has a minimum value of 100 mm.

## Patentansprüche

1. Signaleinheit mit zwei Leuchten (10a, 10b) für Kraftfahrzeuge, von der Art, die jeweils eine Lampe (12a, 12b), einen Reflektor (14a, 14b) und eine Verschlußkappe (16a, 16b; 16) enthält und deren jeweilige leuchtende Flächen (22a, 22b) durch einen festgelegten optischen Abstand (D) voneinander getrennt sein müssen, dadurch gekennzeichnet, daß die beiden Leuchten durch einen physikalischen Abstand (d) voneinander getrennt sind, der im wesentlichen geringer ist als der genannte optische Abstand (D), daß wenigstens eine der beiden Leuchten in einer an die andere Leuchte angrenzenden Zone Ablenkvorrichtungen (17a, 17b; 15a, 15b; 15'a, 15'b) für die ausgesendeten Lichtstrahlen aufweist, damit die so abgelenkten Strahlen nicht an der leuchtenden Fläche (22a, 22b) der genannten Leuchte beteiligt sind, und daß der genannte optische Abstand eingehalten wird.

2. Einheit bestehend aus zwei Leuchten nach Anspruch 1, dadurch gekennzeichnet, daß der physikalische Abstand (d) zwischen den beiden Leuchten (10a, 10b) gleich Null ist und diese aneinander angebaut sind und eine gemeinsame Verschlußkappe (16) aufweisen.

3. Einheit bestehend aus zwei Leuchten nach einem der Ansprüche 1 und 2, dadurch gekennzeichnet, daß jede der beiden Leuchten (10a, 10b) Ablenkvorrichtungen (17a, 17b; 15a, 15b; 15'a, 15'b) aufweist.

4. Einheit bestehend aus zwei Leuchten nach Anspruch 3, dadurch gekennzeichnet, daß die beiden Leuchten (10a, 10b) Ablenkvorrichtungen in den Zonen aufweisen, die im wesentlichen die gleiche Ausdehnung haben.

5. Einheit bestehend aus zwei Leuchten nach einem der Ansprüche 1 bis 4, dadurch gekennzeichnet, daß die Ablenkvorrichtungen Prismen (17a, 17b) enthalten, die an der Verschlußkappe bzw. den Verschlußkappen (16; 16a, 16b) ausgebildet sind.

6. Einheit bestehend aus zwei Leuchten nach Anspruch 5, dadurch gekennzeichnet, daß sich die Prismen (17a, 17b) einer Zone im wesentlichen parallel zum Rand der genannten Zone erstrecken, der an die andere Leuchte angrenzt.

7. Einheit bestehend aus zwei Leuchten nach einem der Ansprüche 1 bis 4, dadurch gekennzeichnet, daß die Ablenkvorrichtungen aus einem Teil (15a, 15b; 15'a, 15'b) des Reflektors oder der Reflektoren (14a, 14b) bestehen.

8. Einheit bestehend aus zwei Leuchten nach einem der vorherigen Ansprüche, dadurch gekennzeichnet, daß die beiden Leuchten nebeneinander angeordnet sind, wobei der optische (D) und der physikalische (d) Abstand horizontal gemessen werden, und daß die genannten Zonen die Form vertikaler Bänder haben, die die gesamte Höhe der Leuchten einnehmen und bei denen die Summe der Breiten im wesentlichen gleich der Differenz (D–d) zwischen dem optischen und dem physikalischen Abstand ist.

9. Einheit bestehend aus zwei Leuchten nach einem der vorherigen Ansprüche, dadurch gekennzeichnet, daß die beiden Leuchten jeweils eine Bremsleuchte bzw. eine Nebenschlußleuchte sind.

10. Einheit bestehend aus zwei Leuchten nach Anspruch 9, dadurch gekennzeichnet, daß der optische Abstand (D), der die leuchtenden Flächen (22a, 22b) der beiden Leuchten voneinander trennen soll, wenigstens 100 mm beträgt.

FIG.1

FIG.2

FIG.3

EP 0 274 315 B1

FIG.4

FIG.5

FIG.6